# EUROPÄISCHE PATENTANMELDUNG

(11) **EP 1 092 961 A1**
(43) Veröffentlichungstag der Anmeldung: **18.04.2001**
(21) Anmeldenummer: 00115827.8
(22) Anmeldetag: 22.07.2000
(51) Int. Cl.: G01F 1/68, G01K 13/02

(54) **Temperaturmesseinsatz für Tauchhülsen, insbesondere für Wärmemengenzähler**

(30) Priorität: 11.10.1999 DE 19948941
(71) Anmelder: M.K. Juchheim GmbH & Co., 36039 Fulda (DE)
(72) Erfinder: Rössner,Martin, 36088 Hünfeld/Mackenzell (DE)
(74) Vertreter: Zapfe, Hans, Dipl.-Ing.

(57) **Zusammenfassung**

Ein Temperaturmeßeinsatz für Tauchhülsen, insbesondere für Wärmemengenzähler, besitzt eine Platine (2), auf der in Längsrichtung der Platine (2) mindestens zwei Leiterbahnen (3, 4) angeordnet sind, die von Anschlußflächen (5, 6) zu einem Temperaturfühler (9) geführt sind. Zwecks Erzielung einer kostengünstigen Herstellung und Erzeugung einer definierten Lage in der Tauchhülse ist auf der Platine (2) zwischen dem Temperaturfühler (9) und den Anschlußflächen (5, 6) mindestens ein Abstandshalter (12, 13) angeordnet, der sich im Einbauzustand an der Tauchhülse abstützt. Vorteilhaft sind dabei zwei Abstandshalter (12, 13) zwischen den Leiterbahnen (3, 4) durch Auflöten angeordnet.

## Beschreibung

Die Erfindung betrifft einen Temperaturmeßeinsatz für Tauchhülsen, insbesondere für Wärmemengenzähler, mit einer Platine, auf der in Längsrichtung der Platine mindestens zwei Leiterbahnen angeordnet sind, die von Anschlußflächen zu einem Temperaturfühler geführt sind.

Durch ein auf dem Markt befindliches Gerät ist es bekannt, einen Temperaturmeßeinsatz zu Isolationszwecken und zur Abstandshalterung mit einem Schrumpfschlauch zu umgeben, bevor er in die Tauchhülse eingesetzt wird. Das Aufschrumpfen eines Schrumpfschlauches ist ein zeitaufwendiger Vorgang, der sich nur in einem besonderen Arbeitsgang unter Wärmeeinwirkung nach der Herstellung der Lötverbindungen ausführen läßt.

Durch die DE 44 24 630 C2 ist es bekannt, in einem gabelförmigen Ende eines aus Isolierstoff bestehenden Tragkörpers einen Temperaturfühler anzuordnen. Der Tragkörper ist jedoch ein kompliziert geformtes gespritztes Bauteil mit T-förmigem Querschnitt und einem Steg, zu dessen beiden Seiten die Anschlußleitungen des Temperaturfühlers und eines Kabels verlegt sind, wobei die Verbindungen durch Quetschhülsen hergestellt sind. Auch in diesem Falle sind die Verbindungsstellen von einem Schrumpfschlauch umgeben, der nur in einem besonderen Arbeitsgang unter Wärmeeinwirkung nach der Herstellung der Quetschverbindungen aufgebracht werden kann.

Durch das DE 92 02 705 U1 ist es bekannt, einen nicht auf einer Platine mit gedruckten Leiterbahnen und Lötflächen angeordneten Meßwiderstand in einen geschlitzten Metallzylinder einzubetten, der sich auf dem Boden eines rohrförmigen Fühlergehäuses abstützt, um den Wärmeübergang zu verbessern. Dadurch wird zunächst einmal die Länge des Fühlergehäuses vergrößert. Die elektrischen Anschlußdrähte sind durch einen Stützstern fixiert und mit den Anschlüssen des Meßwiderstandes verschweißt. Die gesamte Anordnung ist einschließlich einer Teillänge des Meßwiderstandes, der Leitungsdrähte, des Stützsterns und der Enden des Zuführungskabels innerhalb des Fühlergehäuses von einem aufgeschobenen Schrumpfschlauch umgeben. Die einzelnen Arbeitschritte beruhen auf mehreren unterschiedlichen Technologien wie Fräsen, Kleben (mit Aushärten oder Trocknen), Abisolieren, Schweißen, Einfädeln, Aufschieben und Aufschrumpfen eines Schrumpfschlauchs. Die Herstellung ist dadurch zeitraubend und aufwändig und z.B. nicht im Durchlaufverfahren durch einen Tunnelofen durchführbar.

Die vorstehend beschriebenen Technologien machen sämtlich den Einsatz von Schrumpfschläuchen erforderlich.

Durch die DE 196 21 001 A1 ist es bei Meßeinsätzen für hohe Temperaturen über 400 °C bis 1000 °C bekannt, eine Platine aus Keramik mit zwei Leiterbahnen, Steckerkontaktflächen und Lötkontaktflächen nachträglich stellenweise mit einem Dielektrikum abzudecken, um Nebenschlüsse am Meßwiderstand abzudecken. Durch die variable Dicke des aufgebrachten Dielektrikums wird jedoch kein definierter Abstandshalter geschaffen, außerdem handelt es sich auch hier um einen zusätzlichen Arbeitsgang, der nach dem Herstellen der Lötverbindung ausgeführt werden muß.

Der Erfindung liegt daher die Aufgabe zugrunde, einen Temperaturmeßeinsatz der eingangs beschriebenen Art anzugeben, der sich leicht und kostengünstig herstellen und in definierter Lage in einer Tauchhülse unterbringen läßt.

Die Lösung der gestellten Aufgabe erfolgt bei dem eingangs angegebenen Temperaturmeßeinsatz erfindungsgemäß dadurch, daß auf der Platine zwischen dem Temperaturfühler und den Anschlußflächen mindestens ein Abstandshalter angeordnet ist, der sich im Einbauzustand an der Tauchhülse abstützt.

Mit der erfindungsgemäßen Lösung wird die gestellte Aufgabe in vollem Umfange gelöst, d.h., der Temperaturmeßeinsatz läßt sich leicht und kostengünstig herstellen und in definierter Lage in einer Tauchhülse unterbringen.

Es ist dabei im Zuge weiterer Ausgestaltungen der Erfindung besonders vorteilhaft, wenn - entweder einzeln oder in Kombination - :
* der mindestens eine Abstandshalter zwischen den Leiterbahnen angeordnet ist,
* sich zwischen den Leiterbahnen mit Isolationsabständen mindestens eine weitere Lötfläche befindet, auf die der mindestens eine Abstandshalter aufgelötet ist,
* zwei Abstandshalter vorgesehen sind, von denen sich der eine in der Nähe des Temperaturfühlers und der andere in der Nähe der Anschlußflächen befindet,
* der mindestens eine Abstandshalter auf die Platine aufgeklebt ist,
* die Platine als länglicher Streifen ausgebildet ist und wenn die Längskanten der Platine im Bereich des Temperaturfühlers nach innen abgeschrägt ausgebildet sind, und/oder, wenn
* der mindestens eine Abstandshalter ein elektronisches Bauteil mit mindestens einem Lötanschluß ist, das beispielsweise als Ausschußprodukt aus einer anderen Fertigung stammt.

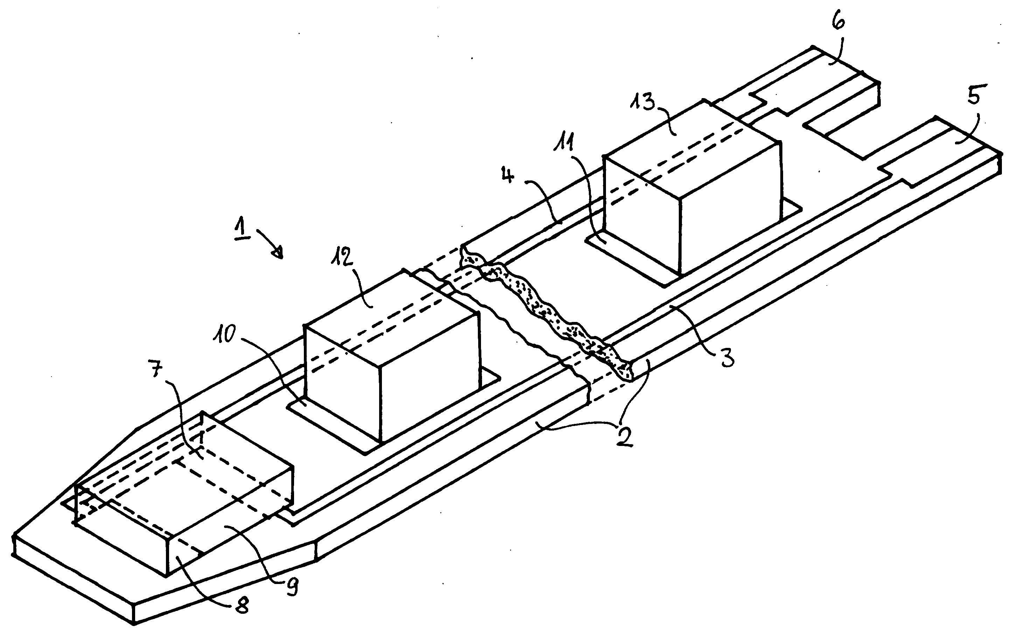

Ein Ausführungsbeispiel der Erfindung wird nachfolgend anhand der einzigen Figur näher erläutert, die eine perspektivische Ansicht zeigt.

Die Figur zeigt einen Temperaturmeßeinsatz 1, der für den Einbau in eine einseitig geschlossene Hülse vorgesehen ist, wobei ggf. eine Wärmeleitpaste verwendet wird. Auf einer streifenförmigen Platine 2 aus einem Isolierstoff mit der Länge von 30 mm und der Breite von 4 mm sind parallel zu den Längskanten der Platine 2 zwei Leiterbahnen 3 und 4 angeordnet, die am anschlußseitigen "kalten" Ende von zwei Anschlußflächen 5 und 6 ausgehen, die für den Anschluß von nicht gezeigten Kabeln oder Steckkontakten vorgesehen sind. Die Leiterbahnen 3 und 4 sind am meßseitigen "warmen" Ende mit zwei Lötflächen 7 und 8 verbunden. Die Herstellung kann durch ein bekanntes Druckverfahren erfolgen.

Auf die Lötflächen 7 und 8 ist ein Temperaturfühler 9 aufgelötet, der ein Platin-Dünnschicht-Widerstandselement Pt 500 ist. Allerdings können auch andere Temperaturfühler verwendet werden. Auch die Abmessungen der Platine 2 sind nur beispielhaft.

Zwischen den Leiterbahnen 3 und 4 befinden sich - unter Wahrung von Isolationsabständen - zwei weitere Lötflächen 10 und 11, die zusammen mit den Leiterbahnen 3 und 4 aufgebracht wurden. Auf diese Lötflächen 10 und 11 ist je ein Abstandshalter 12 und 13 aufgelötet, für die nicht benötigte elektronische Bauteile, sogenannte "Dummies", verwendet werden können, die zu den Lötflächen 10 und 11 komplementäre elektronische Lötkontakte aufweisen. Sämtliche Lötvorgänge können nach automatischer Bestückung gleichzeitig ausgeführt werden, beispielsweise in einem Durchlaufofen.

Die Abstandshalter 12 und 13, von denen sich der vordere (12) in der Nähe des Temperaturfühlers 9 und der hintere (13) in der Nähe der Anschlußflächen 5 und 6 befindet, dienen dazu, die Platine 2 mit allen Aufbauten in stabiler Lage von der Hülse fernzuhalten, ohne daß ein Überzug mit einer Isoliermasse und/oder das Aufbringen eines Schrumpfschlauchs erforderlich ist, was in beiden Fällen zu zusätzlichen Arbeitsgängen mit entsprechendem Zeitaufwand führen würde.

### Bezugszeichenliste:

- 1: Temperaturmeßeinsatz
- 2: Platine
- 3: Leiterbahn
- 4: Leiterbahn
- 5: Anschlußfläche
- 6: Anschlußfläche
- 7: Lötfläche
- 8: Lötfläche
- 9: Temperaturfühler
- 10: Lötfläche
- 11: Lötfläche
- 12: Abstandshalter
- 13: Abstandshalter

## Patentansprüche

1. Temperaturmeßeinsatz für Tauchhülsen, insbesondere für Wärmemengenzähler, mit einer Platine (2), auf der in Längsrichtung der Platine (2) mindestens zwei Leiterbahnen (3, 4) angeordnet sind, die von Anschlußflächen (5, 6) zu einem Temperaturfühler (9) geführt sind, **dadurch gekennzeichnet**, daß auf der Platine (2) zwischen dem Temperaturfühler (9) und den Anschlußflächen (5, 6) mindestens ein Abstandshalter (12, 13) angeordnet ist, der sich im Einbauzustand an der Tauchhülse abstützt.

2. Temperaturmeßeinsatz nach Anspruch 1, **dadurch gekennzeichnet**, daß der mindestens eine Abstandshalter (12, 13) zwischen den Leiterbahnen (3, 4) angeordnet ist.

3. Temperaturmeßeinsatz nach Anspruch 2, **dadurch gekennzeichnet**, daß sich zwischen den Leiterbahnen (3, 4) mit Isolationsabständen mindestens eine weitere Lötfläche (10, 11) befindet, auf die der mindestens eine Abstandshalter (12, 13) aufgelötet ist.

4. Temperaturmeßeinsatz nach Anspruch 1, **dadurch gekennzeichnet**, daß zwei Abstandshalter (12, 13) vorgesehen sind, von denen sich der eine (12) in der Nähe des Temperaturfühlers (9) und der andere (13) in der Nähe der Anschlußflächen (5, 6) befindet.

5. Temperaturmeßeinsatz nach Anspruch 1, **dadurch gekennzeichnet**, daß der mindestens eine Abstandshalter (12, 13) auf die Platine (2) aufgeklebt ist.

6. Temperaturmeßeinsatz nach Anspruch 1, **dadurch gekennzeichnet**, daß die Platine (2) als länglicher Streifen ausgebildet ist und daß die Längskanten der Platine (2) im Bereich des Temperaturfühlers (9) nach innen abgeschrägt ausgebildet sind.

7. Temperaturmeßeinsatz nach Anspruch 1, **dadurch gekennzeichnet**, daß der mindestens eine Abstandshalter (12, 13) ein elektronisches Bauteil mit mindestens einem Lötanschluß ist.
